# EUROPEAN PATENT SPECIFICATION

(11) **EP 3 896 112 B1**
(45) Date of publication and mention of the grant of the patent: **03.07.2024**
(21) Application number: 19895624.5
(22) Date of filing: 29.11.2019
(51) Int. Cl.: C08G 69/24, C08G 69/48, C08G 73/04, C08L 77/02, C08L 79/02, C08G 73/02

(54) **POLYALKYLENEIMINE-MODIFIED POLYAMIDE 4**
POLYALKYLENIMINMODIFIZIERTES POLYAMID 4
POLYAMIDE 4 MODIFIÉ PAR DE LA POLYALKYLÈNEIMINE

(30) Priority: 10.12.2018 JP 2018230509
(43) Date of publication of application: 20.10.2021
(73) Proprietor: Nippon Soda Co., Ltd., Tokyo 100-7010 (JP)
(72) Inventor: FUKAWA, Naohiro, Ichihara-shi, Chiba 290-0045 (JP)
(74) Representative: Wibbelmann, Jobst
(86) International application number: PCT/JP2019/046768
(87) International publication number: WO 2020/121846

(56) References cited:
- CN-A- 101 148 506
- JP-A- S5 047 680
- JP-B1- S4 625 258
- US-A1- 2011 021 687
- Koichiro Tachibana, Kazuhiko Hashimoto, Noriyuki Tansho, Haruki Okawa: "Chemical modification of chain end in Nylon 4 and improvement of its thermal stability", Journal of Polymer Science Part A: Polymer Chemistry, vol. 49, no. 11, 1 June 2011 (2011-06-01), pages 2495-2503, XP055716802, ISSN: 0887-624X, DOI: 10.1002/pola.24682
- KONOMI, TUYOSHI et al.: On the Thermal Degradation of Nylon 4, vol. 38, no. 5, 1982, pages 42-48, XP55716089,
- Tuyoshi Konomi, Kaori Mukasa, Kumiko Ito: "Thermal Degradation Behaviors of Nylon 4, Modified Nylon 4, and a Copolymer Containing Nylon 4", Sen'i Gakkaishi, vol. 41, no. 8, 10 August 1985 (1985-08-10), pages 31 (T-315)-38 (T-322), XP055808497, ISSN: 0037-9875, DOI: 10.2115/fiber.41.8_T315

## Description

### Technical Field

The present invention relates to polyamide 4 whose polymerization terminal is modified with a polyalkylenimine, and a method for producing the same.

### Background Art

Polyamide 4 is easily biodegraded by microorganisms in soil and activated sludge and therefore is expected as a material adapted to the environment. However, polyamide 4 has had points to be improved in terms of thermal stability, molding processability, and the like, compared with other polyamides (nylon 6, nylon 66, nylon 11, nylon 12, and the like). In order to improve such physical properties, attempts have been made to convert the terminal structure of polyamide 4.

Patent Document 1 proposes a 2-pyrrolidone polymer having a special structure characterized by comprising a structure derived from a carboxylic acid-based compound, obtained by polymerizing 2-pyrrolidone using a basic polymerization catalyst and the carboxylic acid-based compound.

Patent Document 2 proposes a high molecular weight star polyamide 4 derivative obtained by polymerizing 2-pyrrolidone in the presence of a basic polymerization catalyst using a polycarboxylic acid derivative as a polymerization initiator.

Patent Document 3 discloses a thermoplastic molding composition.

Non-patent Document 1 proposes polyamide 4 in which the acyllactam moiety at the polymerization terminal of polyamide 4 is modified with n-butylamine or hexamethylenediamine.

Non-patent Document 2 relates to the chemical modification of chain ends in Nylon 4 (polyamide 4) with various reagents, including hexamethylenediamine and butylamine.

### Prior Art Documents

### Patent Documents

Patent Document 1: Japanese unexamined Patent Application Publication No. 2002-265596
Patent Document 2: Japanese unexamined Patent Application Publication No. 2003-238679
Patent Document 3:
   US 2011/021687 A1

### Non-patent Documents

Non-patent Document 1: Journal of Polymer Science Part A: Polymer Chemistry, Vol.49, 2495-2503 (2011)
Non-patent Document 2:
   K. Tachibana et.al.,"Chemical modification of chain end in Nylon 4 and improvement of its thermal stability", Journal of Polymer Science Part A: Polymer Chemistry, vol. 49, no. 11, 1 June 2011, pages 2495-2503

### Summary of the Invention

### Object to be Solved by the Invention

The polyamides 4 whose initiation terminal is modified with a particular structure described in Patent Document 1 and Patent Document 2 have insufficient thermal stability. The polyamide 4 whose polymerization terminal is modified with a particular structure described in Non-patent Document 1 also has insufficient thermal stability. It is an object of the present invention to provide terminal-modified polyamide 4 having improved thermal stability.

### Means to Solve the Object

The present inventor has found terminal-modified polyamide 4 consisting of a polyamide 4-derived site (A) and a polyalkylenimine-derived site (B), and having a structure in which a polyalkylenimine is amide-bonded to a polymerization terminal of polyamide 4, and a method for producing the same, and completed the present invention.

Specifically, the present invention as set forth in the claims relates to the following inventions.
(1) Terminal-modified polyamide 4 consisting of a polyamide 4-derived site (A) and a polyalkylenimine-derived site (B), and having a structure in which a polyalkylenimine is amide-bonded to a polymerization terminal of polyamide 4, wherein a weight ratio between the polyamide 4-derived site (A) and the polyalkylenimine-derived site (B) is 100:0.01-100:20.
(2) The terminal-modified polyamide 4 according to (1), wherein a molecular weight distribution (Mw/Mn) of the terminal-modified polyamide 4 is 1.0 to 10.0.
(3) The terminal-modified polyamide 4 according to (1) or (2), wherein the polyamide 4-derived site (A) is a site derived from polyamide 4 having a number average molecular weight (Mn) of 1,000 to 2,000,000.
(4) The terminal-modified polyamide 4 according to any one of (1) to (3), wherein the polyalkylenimine-derived site (B) is a site derived from a polyalkylenimine having a number average molecular weight (Mn) of 400 to 100,000.
(5) The terminal-modified polyamide 4 according to any one of (1) to (4), wherein the polyalkylenimine-derived site (B) is a site derived from a branched polyalkylenimine.
(6) A method for producing the terminal-modified polyamide 4 according to any one of (1) to (5), comprising reacting the polyalkylenimine with the polymerization terminal of the polyamide 4.
(7) The method for producing the terminal-modified polyamide 4 according to (6), wherein the polyalkylenimine is a branched polyalkylenimine.
(8) The method for producing the terminal-modified polyamide 4 according to (6) or (7), wherein the polyamide 4 is obtained by polymerization of 2-pyrrolidone.

### Effect of the Invention

Terminal-modified polyamide 4 in which a polyalkylenimine is amide-bonded to one terminal may be produced by the production method of the present invention. In addition, terminal-modified polyamide 4 obtained by the production method of the present invention is excellent in thermal stability. Further, a composition comprising polyamide 4 and a polyalkylenimine is excellent in thermal stability.

### Brief Description of Drawings

[Figure 1] Figure 1 is a diagram showing the results of the heat resistance test of Examples 1 and 2 and Comparative Examples 1-3.
[Figure 2] Figure 2 is a diagram showing the results of the heat resistance test of Examples 3-5 and Comparative Examples 4-6.

### Mode of Carrying Out the Invention

### (Terminal-Modified Polyamide 4)

The terminal-modified polyamide 4 of the present invention is not particularly limited as long as it consists of a polyamide 4-derived site (A) and a polyalkylenimine-derived site (B), and has a structure in which a polyalkylenimine is amide-bonded to the polymerization terminal of polyamide 4, and further that the weight ratio between the polyamide 4-derived site (A) and the polyalkylenimine-derived site (B) is 100:0.01-100:20, or in particular 100:0.05-100:20, 100:0.1-100:20, 100:0.1-100:10, 100:0.01-100:5, or 100:0.01-100:1.

For the molecular weight distribution of the terminal-modified polyamide 4, 1.0 to 10.0, 1.0 to 8.0, 1.0 to 5.0, or the like may be selected in terms of the weight average molecular weight/number average molecular weight (Mw/Mn) ratio. The weight average molecular weight and the number average molecular weight are values obtained by converting, based on the molecular weight of standard polymethyl methacrylate, data measured by gel permeation chromatography (GPC) using hexafluoroisopropanol as a solvent.

### (Method for Producing Terminal-Modified Polyamide 4)

The terminal-modified polyamide 4 of the present invention may be produced by reacting polyamide 4 with a polyalkylenimine.

The "polyamide 4" used in the production method of the present invention is a polymer obtained by polymerization of 2-pyrrolidone. The polyamide 4 may be produced by polymerizing 2-pyrrolidone by a known polymerization method. For the 2-pyrrolidone, a commercial product may be used. Polyamide 4 (formula (1)) obtained by polymerization of 2-pyrrolidone has an acyllactam structure at the polymerization terminal. 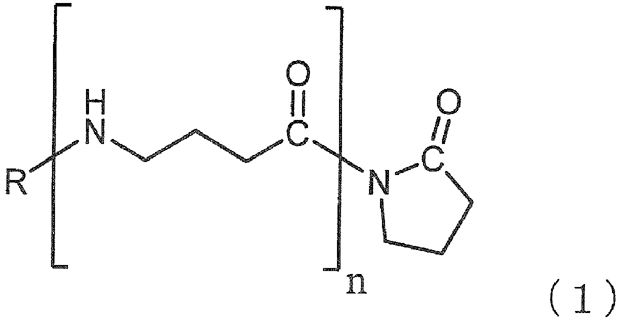 wherein R represents a group derived from the polymerization initiator, and n represents the number of repeating units.

The number average molecular weight (Mn) of the polyamide 4 (1) is not particularly limited, and 1,000 to 2,000,000, 1,000 to 1,000,000, 1,000 to 500,000, 1,000 to 400,000, 1,000 to 300,000, 2,000 to 300,000, 5,000 to 300,000, 10,000 to 300,000, 30,000 to 300,000, or the like may be selected.

The molecular weight distribution of the polyamide 4 is not particularly limited, and 1.0 to 5.0, 1.0 to 4.5, 1.0 to 4.0, 1.0 to 3.5, 1.0 to 3.0, or the like may be selected in terms of the weight average molecular weight/number average molecular weight (Mw/Mn) ratio. The weight average molecular weight and the number average molecular weight are values obtained by converting, based on the molecular weight of standard polymethyl methacrylate, data measured by gel permeation chromatography (GPC) using hexafluoroisopropanol as a solvent.

The structure of the polyalkylenimine may be linear or branched. As the polyalkylenimine, specifically, polyethylenimine, polypropylenimine, or the like may be exemplified.

When the structure is linear, the polyalkylenimine is a polymer having the following repeating unit of (A). When the structure is branched, the polyalkylenimine is a polymer having the following repeating units of (A) and (B). 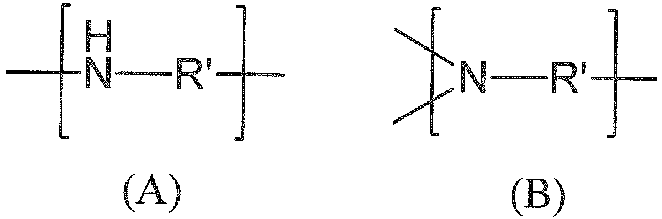 wherein R' represents a C2-8 alkylene group, and R' in the polymer is the same or different. It is indicated that the N atom in (B) is bonded to other two repeating units. When the N atom is present at a polymer terminal, it is bonded to H atoms.

The number average molecular weight (Mn) of the polyalkylenimine is not particularly limited, and is preferably 400 to 100,000. The weight average molecular weight and number average molecular weight measurement conditions are shown below.
Columns: TSKgel α-M manufactured by Tosoh Corporation two
Eluent: 0.15 mol/L sodium sulfate, 1% by mass acetic acid/water
Flow rate: 1.0 mL/min
Column temperature: 40°C
Detector: differential refractometer

By reacting the above polyamide 4 (1) with a polyalkylenimine (PAI) (2) in an organic solvent or in a solvent-free heterogeneous system, the acyllactam moiety at the polymerization terminal of the polyamide 4 (1) reacts with the secondary amino group or primary amino group in the polyalkylenimine (2) to form an amide bond, and terminal-modified polyamide 4 (3) may be produced (reaction formula 1). 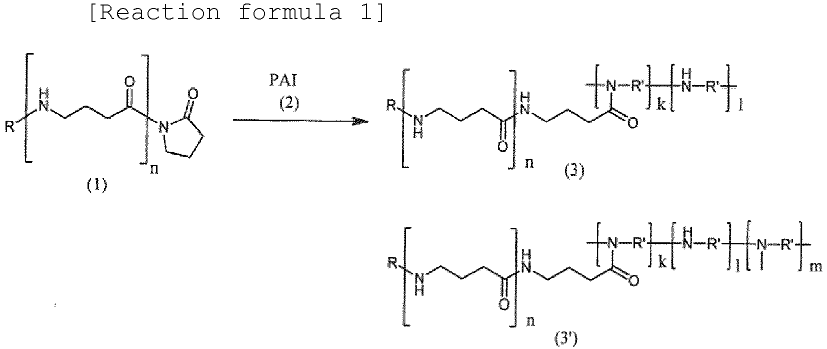 wherein (1) represents polyamide 4, (2) represents a polyalkylenimine (PAI), and (3) and (3') each represent the terminal-modified polyamide 4 of the present invention.

R, R', and n are the same as above, and k, l, and m each represent the number of repeating units in the polyalkylenimine-derived site.

The terminal-modified polyamide 4 (3) is a case where the polyalkylenimine (PAI) is linear, and the terminal-modified polyamide (3') is a case where the polyalkylenimine (PAI) is branched. It is indicated that in the polyalkylenimine-derived sites in the terminal-modified polyamides 4 ((3) and (3')), k repeating units, l repeating units, and m repeating units are randomly present. It is indicated that the N atom in the repeating unit at the right terminal in the polyalkylenimine-derived site in (3') is bonded to other two repeating units.

The terminal-modified polyamide 4 may be produced before being used in an application where thermal stability is required, or may be produced in situ when used. By using a mixture of the above polyamide 4 (1) and the above polyalkylenimine (2), as it is, in an application where thermal stability is required, the reaction represented by the above reaction formula proceeds by heating, and the terminal-modified polyamide 4 (3) may be obtained in situ.

The organic solvent used in the reaction is not particularly limited, and hexafluoroisopropanol, trifluoroethanol, or the like may be exemplified. The terminal-modified polyamide 4 may also be obtained in a heterogeneous mixed state in which no solvent is used during the reaction, that is, solvent-free.

For the reaction temperature, the reaction may be performed at a temperature of 0°C-150°C, 0°C-100°C, or 0°C-80°C.

The reaction time is not particularly limited, and 0.5 h-100 h, 0.5 h-80 h, 0.5 h-60 h, or the like may be selected.

The obtained terminal-modified polyamide 4 may be purified by a general method for purifying polyamide 4.

The obtained terminal-modified polyamide 4 is improved in thermal stability compared with unmodified polyamide 4, and therefore application to various applications is expected.

### (Mixed Composition of Polyamide 4 and Polyalkylenimine)

In the present invention, a composition in which polyamide 4 and a polyalkylenimine, the raw materials of the terminal-modified polyamide 4, are mixed also exhibits stability to heating. The reason is considered to be that both react during heating to produce terminal-modified polyamide 4.

The respective average molecular weights, blending proportions, and the like of the polyamide 4 and the polyalkylenimine used in the composition are the same as those described for the terminal-modified polyamide 4.

### Examples

The present invention will be described in more detail below using Examples.

### Example 1

### [Synthesis of Terminal-Modified Polyamide 4]

0.5 g of polyamide 4 (number average molecular weight 11600) and 4 mL of trifluoroethanol were added to a 50 mL eggplant flask, and the polyamide 4 was dissolved. Further, 2 g of polyethylenimine (number average molecular weight 600, branched, manufactured by FUJIFILM Wako Pure Chemical Corporation) was added. The mixture was stirred at 70°C for 6 h to perform an addition reaction. After the reaction, the trifluoroethanol was distilled off under reduced pressure. The unreacted polyethylenimine was washed with tetrahydrofuran and water, followed by further drying under reduced pressure at 80°C to obtain terminal-modified polyamide 4 in which polyethylenimine was added to one terminal. In the obtained terminal-modified polyamide 4, the weight ratio between the polyamide 4-derived site (A) and the polyalkylenimine-derived site (B) was 94:6.

The A:B weight ratio was calculated from the area ratio between the peak derived from the polyamide 4 (1.8 ppm) and the peaks derived from the polyethylenimine (2.6-3.0 ppm) by ¹H-NMR. The same applies to the following Examples.

### [Heat Resistance Test of Terminal-Modified Polyamide 4]

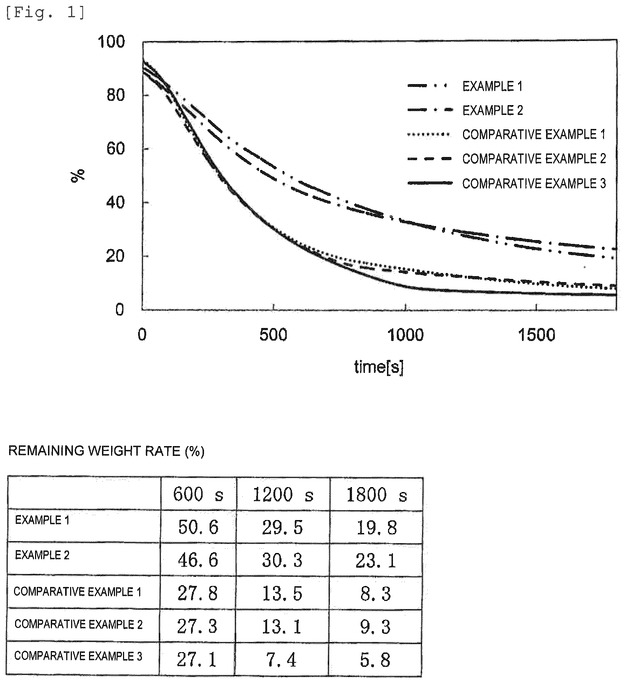

The heat resistance test of the obtained terminal-modified polyamide 4 was performed.
3 mg of the terminal-modified polyamide 4 was placed in an aluminum pan, and heated from room temperature to 280°C at a temperature increase rate of 20°C/min and further kept at 280°C for 30 min using TGA-DSC 3+ manufactured by METTLER TOLEDO (nitrogen was flowed at a flow rate of 50 mL/min). The weight decrease rate for each time was measured in a state in which the temperature was maintained at 280°C, with the point in time when the temperature reached 280°C being t = 0 s. The results are shown in Figure 1.

### Example 2

0.5 g of polyamide 4 (number average molecular weight 11600) and 0.025 g of polyethylenimine (number average molecular weight 600, branched, manufactured by FUJIFILM Wako Pure Chemical Corporation) were placed in a mortar and completely mixed. For the obtained mixture, a heat resistance test was performed under the same conditions as Example 1. It is considered that the polyamide 4 and the polyethylenimine reacted during heating in the heat resistance test. The results are shown in Figure 1.

### Comparative Example 1

Terminal-modified polyamide 4 in which ethylenediamine was added to one terminal was obtained by performing a reaction in the same manner as Example 1 except that 2 g of ethylenediamine was used instead of polyethylenimine. For the obtained terminal-modified polyamide 4, a heat resistance test was performed under the same conditions as Example 1. The results are shown in Figure 1.

### Comparative Example 2

0.5 g of polyamide 4 (number average molecular weight 11600) and 0.025 g of p-xylylenediamine were placed in a mortar and completely mixed. For the obtained mixture, a heat resistance test was performed under the same conditions as Example 1. It is considered that the polyamide 4 and the p-xylylenediamine reacted during heating in the heat resistance test. The results are shown in Figure 1.

### Comparative Example 3

For polyamide 4 having a number average molecular weight of 11600, a heat resistance test was performed under the same conditions as Example 1. The results are shown in Figure 1.

### Example 3

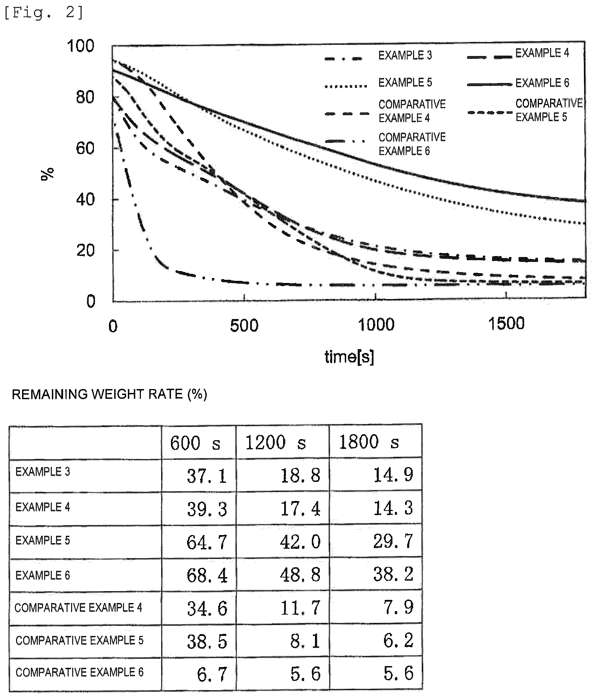

0.5 g of polyamide 4 (number average molecular weight 6500) and 0.025 g of polyethylenimine (number average molecular weight 10000, branched, manufactured by FUJIFILM Wako Pure Chemical Corporation) were placed in a mortar and completely mixed. For the obtained mixture, a heat resistance test was performed under the same conditions as Example 1. It is considered that the polyamide 4 and the polyethylenimine reacted during heating in the heat resistance test. The results are shown in Figure 2.

### Example 4

0.5 g of polyamide 4 (number average molecular weight 6500) and 0.025 g of polyethylenimine (number average molecular weight 600, branched, manufactured by FUJIFILM Wako Pure Chemical Corporation) were placed in a mortar and completely mixed. For the obtained mixture, a heat resistance test was performed under the same conditions as Example 1. It is considered that the polyamide 4 and the polyethylenimine reacted during heating in the heat resistance test. The results are shown in Figure 2.

### Example 5

Terminal-modified polyamide 4 in which polyethylenimine was added to one terminal was obtained by the same method as Example 1 using 0.5 g of polyamide 4 (number average molecular weight 6500) and 2 g of polyethylenimine (number average molecular weight 600, branched, manufactured by FUJIFILM Wako Pure Chemical Corporation). In the obtained terminal-modified polyamide 4, the weight ratio between the polyamide 4-derived site (A) and the polyalkylenimine-derived site (B) was 88:12. For the obtained terminal-modified polyamide 4, a heat resistance test was performed under the same conditions as Example 1. The results are shown in Figure 2.

### Example 6

Terminal-modified polyamide 4 in which polyethylenimine was added to one terminal was obtained by the same method as Example 1 using 0.5 g of polyamide 4 (number average molecular weight 6500) and 2 g of polyethylenimine (number average molecular weight 10000, branched, manufactured by FUJIFILM Wako Pure Chemical Corporation). In the obtained terminal-modified polyamide 4, the weight ratio between the polyamide 4-derived site (A) and the polyalkylenimine-derived site (B) was 90:10. For the obtained terminal-modified polyamide 4, a heat resistance test was performed under the same conditions as Example 1. The results are shown in Figure 2.

### Comparative Example 4

Terminal-modified polyamide 4 in which ethylenediamine was added to one terminal was obtained by the same method as Example 1 except that polyamide 4 having a number average molecular weight of 6,500 was used as polyamide 4, and 2 g of ethylenediamine was used instead of polyethylenimine. For the obtained terminal-modified polyamide 4, a heat resistance test was performed under the same conditions as Example 1. The results are shown in Figure 2.

### Comparative Example 5

0.5 g of polyamide 4 (number average molecular weight 6500) and 0.025 g of p-xylylenediamine were placed in a mortar and completely mixed. For the obtained mixture, a heat resistance test was performed under the same conditions as Example 1. It is considered that the polyamide 4 and the p-xylylenediamine reacted during heating in the heat resistance test. The results are shown in Figure 2.

### Comparative Example 6

For polyamide 4 having a number average molecular weight of 6500, a heat resistance test was performed under the same conditions as Example 1. The results are shown in Figure 2.

## Claims

1. Terminal-modified polyamide 4 consisting of a polyamide 4-derived site (A) and a polyalkylenimine-derived site (B), and having a structure in which a polyalkylenimine is amide-bonded to a polymerization terminal of polyamide 4, wherein a weight ratio between the polyamide 4-derived site (A) and the polyalkylenimine-derived site (B) as determined according to the method identified in the specification is 100:0.01-100:20.

2. The terminal-modified polyamide 4 according to claim 1, wherein a molecular weight distribution (Mw/Mn) of the terminal-modified polyamide 4 as determined according to the method identified in the specification is 1.0 to 10.0.

3. The terminal-modified polyamide 4 according to claims 1 or 2, wherein the polyamide 4-derived site (A) is a site derived from polyamide 4 having a number average molecular weight (Mn) as determined according to the method identified in the specification of 1,000 to 2,000,000.

4. The terminal-modified polyamide 4 according to any one of claims 1 to 3, wherein the polyalkylenimine-derived site (B) is a site derived from a polyalkylenimine having a number average molecular weight (Mn) as determined according to the method identified in the specification of 400 to 100,000.

5. The terminal-modified polyamide 4 according to any one of claims 1 to 4, wherein the polyalkylenimine-derived site (B) is a site derived from a branched polyalkylenimine.

6. A method for producing the terminal-modified polyamide 4 according to any one of claims 1 to 5, comprising reacting the polyalkylenimine with the polymerization terminal of the polyamide 4.

7. The method for producing the terminal-modified polyamide 4 according to claim 6, wherein the polyalkylenimine is a branched polyalkylenimine.

8. The method for producing the terminal-modified polyamide 4 according to claim 6 or 7, wherein the polyamide 4 is obtained by polymerization of 2-pyrrolidone.

## Patentansprüche

1. Endständig modifiziertes Polyamid 4, bestehend aus einer von Polyamid 4 abgeleiteten Stelle (A) und einer von Polyalkylenimin abgeleiteten Stelle (B), mit einer Struktur, in der ein Polyalkylenimin mit einer Amidbindung an ein Polymerisationsende von Polyamid 4 gebunden ist,
wobei ein Gewichtsverhältnis zwischen der von Polyamid 4 abgeleiteten Stelle (A) und der von Polyalkylenimin abgeleiteten Stelle (B), bestimmt gemäß der in der Beschreibung angegebenen Methode, 100:0,01 - 100:20 beträgt.

2. Das endständig modifizierte Polyamid 4 nach Anspruch 1, wobei eine Molmassenverteilung (Mw/Mn) des endständig modifizierten Polyamids 4, bestimmt nach der in der Beschreibung angegebenen Methode, 1,0 bis 10,0 beträgt.

3. Das endständig modifizierte Polyamid 4 nach Anspruch 1 oder 2, wobei die von Polyamid 4 abgeleitete Stelle (A) eine Stelle ist, die von Polyamid 4 mit einer zahlenmittleren Molmasse (Mn), bestimmt nach der in der Beschreibung angegebenen Methode, von 1.000 bis 2.000.000 abgeleitet ist.

4. Das endständig modifizierte Polyamid 4 nach einem der Ansprüche 1 bis 3, wobei die von Polyalkylenimin abgeleitete Stelle (B) eine Stelle ist, die von einem Polyalkylenimin mit einer zahlenmittleren Molmasse (Mn), bestimmt nach der in der Beschreibung angegebenen Methode, von 400 bis 100.000 abgeleitet ist.

5. Das endständig modifizierte Polyamid 4 nach einem der Ansprüche 1 bis 4, wobei die von Polyalkylenimin abgeleitete Stelle (B) eine Stelle ist, die von einem verzweigten Polyalkylenimin abgeleitet ist.

6. Verfahren zur Herstellung des endständig modifizierten Polyamids 4 nach einem der Ansprüche 1 bis 5, umfassend die Umsetzung des Polyalkylenimins mit dem Polymerisationsende des Polyamids 4.

7. Das Verfahren zur Herstellung des endständig modifizierten Polyamids 4 nach Anspruch 6, wobei das Polyalkylenimin ein verzweigtes Polyalkylenimin ist.

8. Das Verfahren zur Herstellung des endständig modifizierten Polyamids 4 nach Anspruch 6 oder 7, wobei das Polyamid 4 durch Polymerisation von 2-Pyrrolidon erhalten wird.

## Revendications

1. Polyamide 4 à terminaison modifiée, constitué d'un site dérivé du polyamide 4 (A) et d'un site dérivé d'une polyalkylènimine (B), et ayant une structure dans laquelle une polyalkylènimine est liée par un amide à une terminaison de polymérisation du polyamide 4, dans lequel un rapport pondéral entre le site dérivé du polyamide 4 (A) et le site dérivé de la polyalkylènimine (B), tel que déterminé selon le procédé identifié dans la description, est de 100:0,01 à 100:20.

2. Polyamide 4 à terminaison modifiée selon la revendication 1, dans lequel une distribution de poids moléculaire (Mw/Mn) du polyamide 4 à terminaison modifiée telle que déterminée selon le procédé identifié dans la description est de 1,0 à 10,0.

3. Polyamide 4 à terminaison modifiée selon les revendications 1 ou 2, dans lequel le site dérivé du polyamide 4 (A) est un site dérivé du polyamide 4 ayant une masse moléculaire moyenne en nombre (Mn) telle que déterminée selon le procédé identifié dans la description de 1 000 à 2 000 000.

4. Polyamide 4 à terminaison modifiée selon l'une quelconque des revendications 1 à 3, dans lequel le site dérivé d'une polyalkylènimine (B) est un site dérivé d'une polyalkylènimine ayant une masse moléculaire moyenne en nombre (Mn) telle que déterminée selon le procédé identifié dans la description de 400 à 100 000.

5. Polyamide 4 à terminaison modifiée selon l'une quelconque des revendications 1 à 4, dans lequel le site dérivé d'une polyalkylènimine (B) est un site dérivé d'une polyalkylènimine ramifiée.

6. Procédé de production du polyamide 4 à terminaison modifiée selon l'une quelconque des revendications 1 à 5, comprenant la réaction de la polyalkylènimine avec la terminaison de polymérisation du polyamide 4.

7. Procédé de production du polyamide 4 à terminaison modifiée selon la revendication 6, dans lequel la polyalkylènimine est une polyalkylènimine ramifiée.

8. Procédé de production du polyamide 4 à terminaison modifiée selon la revendication 6 ou 7, dans lequel le polyamide 4 est obtenu par polymérisation de 2-pyrrolidone.
